# EUROPEAN PATENT APPLICATION

(11) **EP 4 804 261 A1**
(43) Date of publication of application: **09.09.2026**
(21) Application number: 24885346.7
(22) Date of filing: 02.10.2024
(51) Int. Cl.: H01M 10/04, H01M 10/0587, H01M 50/107

(54) **SECONDARY BATTERY**

(30) Priority: 31.10.2023 JP 2023186108
(71) Applicant: Panasonic Intellectual Property Management Co., Ltd., Kadoma-shi, Osaka 571-0057 (JP)
(72) Inventor: KASHIMURA, Ryo, Osaka 571-0057 (JP)
(74) Representative: Eisenführ Speiser
(86) International application number: PCT/JP2024/035248
(87) International publication number: WO 2025/094570

(57) **Abstract**

This secondary battery comprises: a wound electrode body (14) in which a positive electrode and a negative electrode (12) are wound via a separator; and a cylindrical outer can that houses the electrode body (14). A belt-shaped tape (50) for fixing a winding end is adhered to the outer peripheral surface of the electrode body (14). The tape (50) is adhered so that: the tape (50) does not overlap itself in the thickness direction of the tape (50); and both ends (51, 52) of the tape (50) in the length direction overlap each other in the axial direction of the electrode body (14).

## Description

### TECHNICAL FIELD

The present disclosure relates to a secondary battery.

### BACKGROUND ART

Conventionally, secondary batteries comprising a wound electrode assembly in which a positive electrode and a negative electrode are wound around a separator and a housing can that houses the electrode assembly are widely known (for example, refer to Patent Literature 1). A wound electrode assembly typically has a holding tape for maintaining a winding structure applied to an outer circumferential surface of the electrode assembly. For example, Patent Literature 1 discloses an electrode assembly in which a holding tape for fixing a winding end of a negative electrode is applied to both end portions of the outer circumferential surface in an axial direction.

### CITATION LIST

### PATENT LITERATURE

PATENT LITERATURE 1: International Publication No. WO 2018/168628

### SUMMARY

When the holding tape overlaps in a thickness direction of the tape on the outer circumferential surface of the electrode assembly, an outer diameter of the electrode assembly may increase, potentially making it difficult to insert the electrode assembly into the housing can. Therefore, generally, the holding tape is applied over a length corresponding to 50% to 90% of a circumferential length of the outer circumferential surface of the electrode assembly. In other words, the holding tape is applied in a state where a gap is provided between both end portions.

However, in a case where the holding tape is applied in a state where a gap is provided between both end portions of the holding tape, an edge of the housing can may come into contact with the gap when the electrode assembly is inserted into the housing can and may cause a negative electrode plate positioned on the outer circumference of the electrode assembly to curl. When the negative electrode plate curls, the negative electrode plate may come into contact with a positive electrode plate or a positive electrode lead electrically connected to the positive electrode plate, creating a risk of occurrence of a short circuit.

A secondary battery according to an aspect of the present disclosure is a secondary battery comprising: a wound electrode assembly in which a positive electrode and a negative electrode are wound around a separator; and a cylindrical housing can that houses the electrode assembly, wherein strip tapes for fixing a winding end of the electrode assembly are applied to an outer circumferential surface of the electrode assembly, and the tapes are applied so that the tapes do not overlap with each other in a thickness direction of the tapes but both end portions of the tapes in a length direction overlap with each other in an axial direction of the electrode assembly.

According to the secondary battery of an aspect of the present disclosure, electrode plates can be prevented from curling when inserting an electrode assembly into a housing can while providing a gap between both end portions of a holding tape. As a result, a secondary battery that suppresses occurrences of a short circuit can be provided.

### BRIEF DESCRIPTION OF DRAWING

FIG. 1 is a sectional view in an axial direction of a secondary battery that is an example of an embodiment.
FIG. 2 is a perspective view of an electrode assembly that is an example of the embodiment.
FIG. 3 is a plan view of the electrode assembly that is an example of the embodiment as viewed from an outer side in a radial direction.
FIG. 4 is a plan view of an electrode assembly that is another example of the embodiment as viewed from the outer side in the radial direction.
FIG. 5 is a plan view of an electrode assembly that is another example of the embodiment as viewed from the outer side in the radial direction.
FIG. 6 is a plan view of an electrode assembly that is another example of the embodiment as viewed from the outer side in the radial direction.

### DESCRIPTION OF EMBODIMENTS

Hereinafter, an example of an embodiment of a secondary battery according to the present disclosure will be described in detail with reference to the drawings. The embodiment described below is merely an example and the present disclosure is not limited to the following embodiment. In addition, configurations created by selectively combining respective constituent elements of the embodiment described below are included in the scope of the present disclosure.

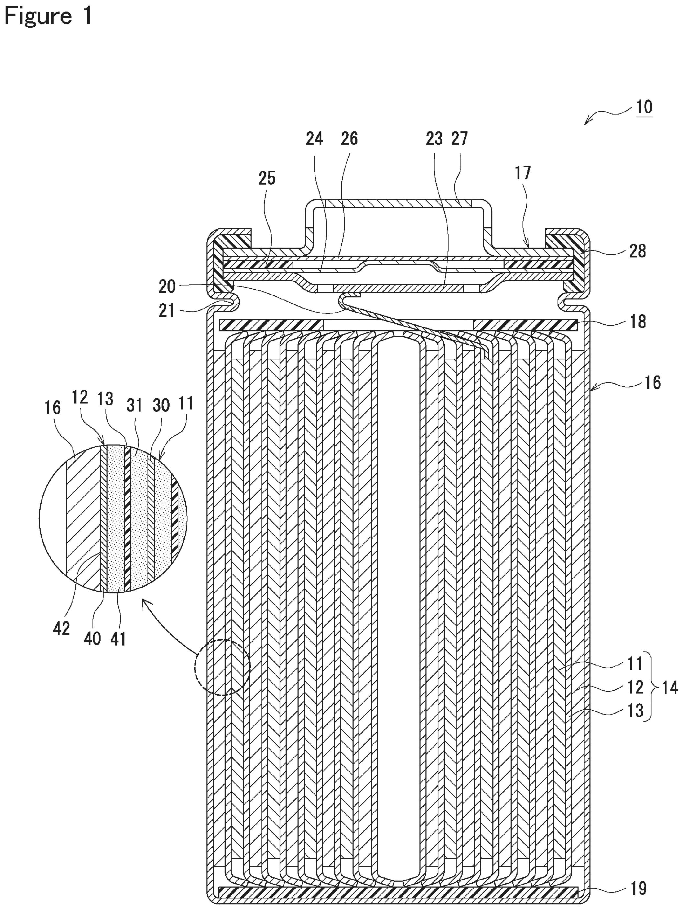

FIG. 1 is a diagram schematically showing a cross section of a secondary battery 10 that is an example of the embodiment. Note that a strip tape 50 to be described later is not illustrated in FIG. 1. As shown in FIG. 1, the secondary battery 10 comprises an electrode assembly 14, a non-aqueous electrolyte (not illustrated), and an housing can 16 that houses the electrode assembly 14 and the non-aqueous electrolyte. The electrode assembly 14 has a positive electrode 11, a negative electrode 12, and a separator 13 and has a wound structure in which the positive electrode 11 and the negative electrode 12 are wound in a spiral shape around the separator 13. The housing can 16 is a cylindrical bottomed metal container with one side in an axial direction opened, and the opening of the housing can 16 is sealed by a sealing assembly 17. Hereinafter, for convenience of description, a side of the sealing assembly 17 of the secondary battery 10 will be referred to as "up" and a side of a bottom of the housing can 16 will be referred to as "down".

The non-aqueous electrolyte has lithium-ion conductivity. The non-aqueous electrolyte may be a liquid electrolyte (electrolytic solution) or a solid electrolyte.

The liquid electrolyte (electrolytic solution) contains a non-aqueous solvent and an electrolyte salt dissolved in the non-aqueous solvent. As the non-aqueous solvent, for example, esters, ethers, nitriles, amides, and mixtures of two or more of these substances are used. Examples of the non-aqueous solvent include ethylene carbonate (EC), ethyl methyl carbonate (EMC), dimethyl carbonate (DMC), diethyl carbonate (DEC), and a mixture of these solvents. The non-aqueous solvent may contain halogen-substituted product (for example, fluoroethylene carbonate) in which at least some of the hydrogen of the solvents is replaced with halogen atoms such as fluorine. For example, lithium salts such as LiPF₆ are used as the electrolyte salts.

As the solid electrolyte, for example, a solid or gel polymer electrolyte, an inorganic solid electrolyte, and the like can be used. As the inorganic solid electrolyte, known materials used in all-solid-state lithium-ion secondary batteries and the like (for example, oxide-based solid electrolytes, sulfide-based solid electrolytes, and halogen-based solid electrolytes) can be used. A polymer electrolyte contains, for example, a lithium salt and a matrix polymer or a non-aqueous solvent, a lithium salt, and a matrix polymer. As the matrix polymer, for example, a polymer material that absorbs a non-aqueous solvent and becomes a gel is used. Examples of polymer materials include fluorine resins, acrylic resins, and polyether resins.

The positive electrode 11, the negative electrode 12, and the separator 13 which constitute the electrode assembly 14 are all long, strip-like bodies which are wound in a spiral shape and stacked alternately in a radial direction of the electrode assembly 14. The negative electrode 12 is formed slightly larger than the positive electrode 11 in order to prevent lithium precipitation. In other words, the negative electrode 12 is formed longer than the positive electrode 11 in a length direction and a width direction (transverse direction). The separator 13 is formed slightly larger than at least the positive electrode 11, and two separators 13 are arranged so as to sandwich the positive electrode 11. The secondary battery 10 comprises insulating plates 18, 19 arranged above and below the electrode assembly 14, respectively.

The positive electrode 11 includes a positive electrode core 30 and a positive electrode mixture layer 31 formed on the positive electrode core 30. As the positive electrode core 30, a foil of a metal that is stable in a potential range of the positive electrode 11 such as aluminum or an aluminum alloy and a film with the metal arranged on a surface layer can be used. The positive electrode mixture layer 31 includes a positive electrode active material, a conductive agent, and a binding agent, and is preferably formed on both surfaces of the positive electrode core 30 excluding a positive electrode core-exposed portion (not illustrated) where a positive electrode lead 20 is welded. For example, the positive electrode 11 can be fabricated by coating the positive electrode core 30 with a positive electrode mixture slurry containing the positive electrode active material, the conductive agent, the binding agent, and the like, letting the coating film dry, and then compressing the positive electrode 11 to form the positive electrode mixture layer 31 on both surfaces of the positive electrode core 30.

The positive electrode mixture layer 31 contains a granulated lithium metal composite oxide as the positive electrode active material. A lithium metal composite oxide is a composite oxide containing metal elements such as Co, Mn, Ni, and Al in addition to Li. The metal element comprising the lithium metal composite oxide is at least one selected from the group consisting of, for example, Mg, Al, Ca, Sc, Ti, V, Cr, Mn, Fe, Co, Ni, Cu, Zn, Ga, Ge, Y, Zr, Sn, Sb, W, Pb, and Bi. Among these metal elements, at least one selected from the group consisting of Co, Ni and Mn is preferable. Examples of suitable composite oxides include a lithium metal composite oxide containing Ni, Co, and Mn and a lithium metal composite oxide containing Ni, Co, and Al.

Examples of the conductive agent included in the positive electrode mixture layer 31 include carbon black such as acetylene black and Ketjen black, graphite, carbon nanotubes (CNT), carbon nanofibers, graphene, and other carbon materials. Examples of the binding agent included in the positive electrode mixture layer 31 include fluorinated resins such as polytetrafluoroethylene (PTFE) and polyvinylidene fluoride (PVDF), polyacrylonitrile (PAN), polyimide, acrylic resins, and polyolefin. In addition, these resins may be used in combination with carboxymethyl cellulose (CMC) or its salts, polyethylene oxide (PEO), and the like.

The negative electrode 12 includes a negative electrode core 40 and a negative electrode mixture layer 41 formed on the negative electrode core 40. As the negative electrode core 40, a foil of a metal that is stable in a potential range of the negative electrode 12 such as copper or a copper alloy or a film with the metal arranged on a surface layer can be used. The negative electrode mixture layer 41 includes a negative electrode active material, a binding agent, and when necessary, a conductive agent, and is preferably formed on both surfaces of the negative electrode core 40 excluding a negative electrode core-exposed portion 42 to be described later. The negative electrode 12 can be fabricated by coating a surface of the negative electrode core 40 with a negative electrode mixture slurry containing the negative electrode active material, the binding agent, and the like, letting the coating film dry, and then compressing the negative electrode core to form the negative electrode mixture layer 41 on both surfaces of the negative electrode core 40.

The negative electrode mixture layer 41 typically contains, as the negative electrode active material, a carbon material that reversibly absorbs and releases lithium ions. A suitable example of the carbon material is graphite including natural graphite such as scale graphite, lump graphite, and earth graphite and artificial graphite such as massive artificial graphite (MAG) and graphitized mesophase carbon microbeads (MCMB). In addition, as the negative electrode active material, a material containing at least one of an element such as Si or Sn that alloys with Li and a material containing the element may be used. Among these materials, a Si-containing composite material is preferable.

Suitable examples of the Si-containing composite material include a material in which Si fine particles are dispersed within a SiO₂ phase or a silicate phase such as lithium silicate and a material in which Si fine particles are dispersed within an amorphous carbon phase. For example, a conductive layer such as a carbon coating is formed on the surface of the particles of the composite material. The combined use of a carbon material and a Si-containing composite material as the negative electrode active material is preferable from the perspective of achieving both high capacity and high resistance of batteries.

In a similar manner to the positive electrode mixture layer 31, although fluorine-containing resin, PAN, polyimide, acrylic resin, polyolefin, and the like can be used for the binding agent contained in the negative electrode mixture layer 41, styrene-butadiene rubber (SBR) is preferably used. In addition, the negative electrode mixture layer 41 preferably contains CMC or its salts, polyacrylic acid (PAA) or its salts, polyvinyl alcohol (PVA), or the like. In particular, suitably, SBR is used in combination with CMC or its salts, PAA or its salts, or the like. The negative electrode mixture layer 41 may include a conductive agent such as CNT.

A porous sheet with ion permeability and insulation properties is used as the separator 13. Specific examples of the porous sheet include microporous thin films, woven fabrics, and non-woven fabrics. Polyolefins such as polyethylene and polypropylene, and cellulose are preferable materials for the separator 13. The separator 13 may have a single-layer structure or a multi-layer structure. In addition, a highly heat-resistant resin layer such as aramid resin may be formed on a surface of the separator 13. A filler layer including an inorganic filler may be formed at an interface between the separator 13 and at least one of the positive electrode 11 and the negative electrode 12.

The negative electrode 12 is arranged on the outer circumferential surface of the electrode assembly 14. The electrode assembly 14 includes the positive electrode lead 20 connected to the positive electrode core 30 by welding or the like. While a negative electrode lead is not provided in the example shown in FIG. 1, an exposed portion of the negative electrode core 40 may be provided on an inner circumferential side of the electrode assembly 14 and a negative electrode lead may be connected to the exposed portion.

The negative electrode core-exposed portion 42 where a surface of the negative electrode core 40 is exposed is formed on the outer circumferential surface of the electrode assembly 14. While the negative electrode core-exposed portion 42 may be formed in a part of the outer circumferential surface of the electrode assembly 14, preferably, the negative electrode core-exposed portion 42 is formed over the entire outer circumferential surface. The negative electrode core-exposed portion 42 may be formed only on one surface (outer surface) of the negative electrode core 40 facing the outer side of the electrode assembly 14 or may be formed on both surfaces of the negative electrode core 40. For example, the negative electrode core-exposed portion 42 is formed within a range of approximately one to two circumferential lengths of the electrode assembly 14 from an end of winding (not illustrated) that is one end in the length direction of the negative electrode core 40 (negative electrode 12) positioned on the outer circumferential surface of the electrode assembly 14.

In the secondary battery 10, the negative electrode core-exposed portion 42 of the negative electrode 12 comes into contact with an inner surface of the housing can 16 and the negative electrode 12 and the housing can 16 are electrically connected. For example, the negative electrode core-exposed portion 42 is in contact with the inner surface of the housing can 16 over the entire outer circumferential surface of the electrode assembly 14. The positive electrode lead 20 passes through a through-hole in the insulating plate 18 and extends to a side of the sealing assembly 17, and is connected to a lower surface of an internal terminal plate 23 that is a bottom plate of the sealing assembly 17 by welding or the like. This makes the sealing assembly 17 a positive electrode external terminal and the housing can 16 a negative electrode external terminal.

As described above, the housing can 16 is a cylindrical bottomed metal container with one side in the axial direction opened. A gasket 28 is provided between the housing can 16 and the sealing assembly 17 to ensure sealability of the interior of the battery and insulation properties between the housing can 16 and the sealing assembly 17. A grooved portion 21 which is a part of the side surface portion projecting inward and which supports the sealing assembly 17 is formed in the housing can 16. The grooved portion 21 is preferably formed in an annular shape along a circumferential direction of the housing can 16 and supports the sealing assembly 17 with an upper surface thereof. The sealing assembly 17 is fixed to an upper part of the housing can 16 by the grooved portion 21 and an opening end portion of the housing can 16 which is crimped with respect to the sealing assembly 17.

The sealing assembly 17 has a structure in which the internal terminal plate 23, a lower vent member 24, an insulating member 25, an upper vent member 26, and the cap 27 are stacked in order from a side of the electrode assembly 14. Each member constituting the sealing assembly 17 has, for example, a disk shape or a ring shape and the respective members excluding the insulating member 25 are electrically connected to each other. The lower vent member 24 and the upper vent member 26 are connected to each other at respective centers thereof and the insulating member 25 is interposed between respective peripheral portions thereof. When an abnormality occurs in the battery and internal pressure rises, due to the lower vent member 24 deforming and breaking so as to push the upper vent member 26 upward to the side of the cap 27, a current path between the lower vent member 24 and the upper vent member 26 is interrupted. As the internal pressure rises further, the upper vent member 26 ruptures and gas is discharged through an opening portion of the cap 27.

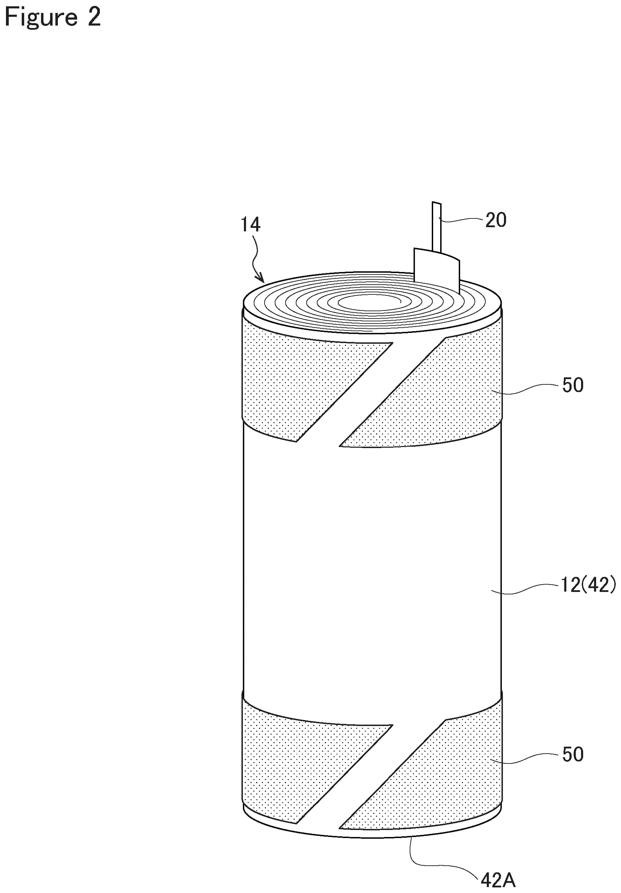

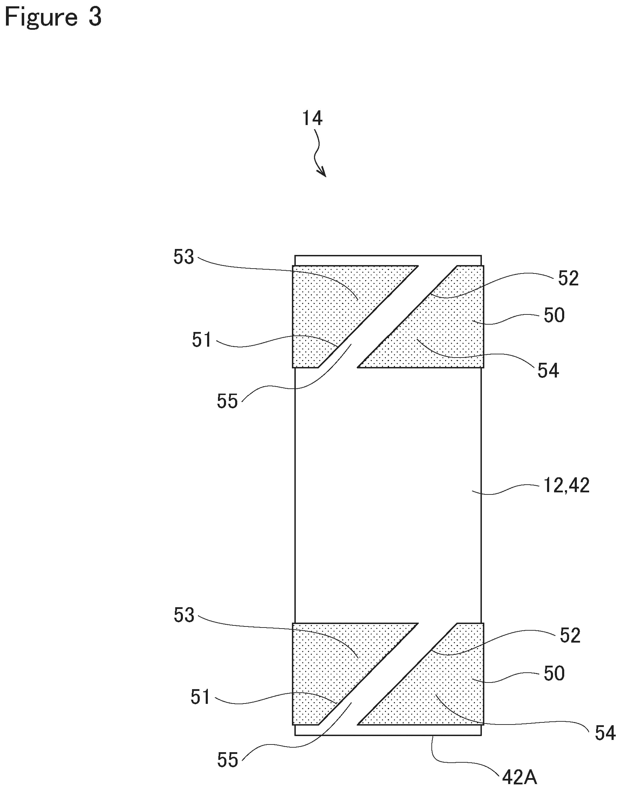

Hereinafter, the electrode assembly 14 and, in particular, the tape 50 will be described in detail with reference to FIGS. 2 and 3.

FIG. 2 is a perspective view of the electrode assembly 14. As shown in FIG. 2, the tapes 50 are applied to the outer circumferential surface of the electrode assembly 14. The tapes 50 are holding tapes for fixing the winding end (not illustrated) of the negative electrode 12 to the outer circumferential surface of the electrode assembly 14 and holding a winding structure of the electrode assembly 14. In the present embodiment, as described above, the outer circumferential surface of the electrode assembly 14 is formed by the negative electrode core-exposed portion 42 of the negative electrode 12.

The tapes 50 are formed into long, slender strips. The tapes 50 are applied to both end portions of the electrode assembly 14 in the axial direction along the circumferential direction of the electrode assembly 14. In addition, the tapes 50 are applied to so as not to overlap in the thickness direction of the tapes 50 over the entire outer circumferential surface of the electrode assembly 14. Applying the tapes 50 so as not to overlap in the thickness direction of the tapes 50 suppresses an increase in the outer diameter of the electrode assembly 14 and enables the electrode assembly 14 to be smoothly inserted into the housing can 16.

With the exception of narrow width regions 53 and 54 (refer to FIG. 3) to be described later, a width of the tapes 50 is preferably greater than or equal to 5% and less than or equal to 30% of a length of the electrode assembly 14 in the axial direction. In addition, the width of the tapes 50 is constant throughout an entire length of the tapes 50 with the exception of the narrow width regions 53 and 54. For example, the tapes 50 may only be applied within a range of less than or equal to 30% of a width (length in up-down direction) of the negative electrode 12 from upper and lower ends of the negative electrode core-exposed portion 42 (negative electrode 12). While the tapes 50 may be applied with predetermined gaps between the tapes 50 and the upper and lower ends of the negative electrode core-exposed portion 42 in consideration of application error, the gaps between the tapes 50 and the upper and lower ends of the negative electrode core-exposed portion 42 are, for example, less than or equal to 1 mm.

An area over which the tapes 50 are applied is preferably greater than or equal to 20% and more preferably greater than or equal to 30% of an area of the outer circumferential surface of the electrode assembly 14. Setting the area over which the tapes 50 are applied to greater than or equal to 20% of the area of the outer circumferential surface of the electrode assembly 14 makes an effect of the tapes 50 of suppressing curling of an electrode plate (to be described later) more pronounced. In addition, the area over which the tapes 50 are applied is preferably less than or equal to 70% of the area of the outer circumferential surface of the electrode assembly 14 and more preferably less than or equal to 60%. Setting the area over which the tapes 50 are applied to less than or equal to 70% of the area of the outer circumferential surface of the electrode assembly 14 increases the area of the negative electrode core-exposed portion 42 arranged in the outer circumferential portion of the electrode assembly 14 and realizes a reduction in resistance of the secondary battery 10. Therefore, the area over which the tapes 50 are applied is preferably greater than or equal to 20% and less than or equal to 70% and more preferably greater than or equal to 30% and less than or equal to 60% of the area of the outer circumferential surface of the electrode assembly 14.

The tapes 50 include a base material constituted of an insulating resin and a pressure sensitive adhesive layer formed on one surface of the base material. The tapes 50 are preferably an insulating tape that is substantially non-conductive. The tapes 50 may have a multi-layer structure of three layers or more, and the base material may be constituted of greater than or equal to two layers of the same or different types of laminate films. The tapes 50 may contain an inorganic filler such as titania, alumina, silica, or zirconia and may be provided with a layer containing the inorganic substance separate from the base material and the pressure sensitive adhesive layer.

Examples of the resin that constitutes the base material of the tapes 50 include polyesters such as polyethylene terephthalate (PET), polypropylene (PP), polyimide (PI), polyphenylene sulfide (PPS), polyetherimide (PEI), and polyamide. For example, the pressure sensitive adhesive layer is formed by applying a pressure sensitive adhesive to one surface of the base material. Although the pressure sensitive adhesive constituting the pressure sensitive adhesive layer may be either a hot-melt type that exhibits tackiness when heated or a thermosetting type that hardens when heated, from the perspective of productivity and the like, a pressure sensitive adhesive that possesses tackiness at room temperature is preferable. Examples of the pressure sensitive adhesive that constitutes the pressure sensitive adhesive layer include acrylic pressure sensitive adhesives and synthetic rubber-based pressure sensitive adhesives.

While a thickness of the tapes 50 is not particularly limited, for example, the thickness is greater than or equal to 20 µm and less than or equal to 100 µm and preferably greater than or equal to 30 µm and less than or equal to 70 µm.

FIG. 3 is a plan view of the electrode assembly 14 as viewed from the outer side in the radial direction. As shown in FIG. 3, the tapes 50 are applied to both end portions of the electrode assembly 14 in the axial direction along the circumferential direction of the electrode assembly 14. Note that in the present embodiment, the tape 50 applied to an upper end side of the electrode assembly 14 in the axial direction and the tape 50 applied to a lower end side of the electrode assembly 14 in the axial direction have a same shape.

As described above, the tapes 50 are applied to so as not to overlap in the thickness direction of the tapes 50 over the entire outer circumferential surface of the electrode assembly 14. In addition, when one end of the tapes 50 in the length direction is considered a first end 51 and another end of the tape 50 in the length direction is considered a second end 52, the tapes 50 are applied so that the first end 51 and the second end 52 overlap with each other in the axial direction of the electrode assembly 14. Accordingly, no region where the negative electrode 12 (negative electrode core-exposed portion 42) is exposed along the axial direction of the electrode assembly 14 is created on the outer circumferential surface of the electrode assembly 14. As a result, even when an edge of the housing can 16 comes into contact with the electrode assembly 14 when inserting the electrode assembly 14 into the housing can 16, progress of curling of the electrode plate can be suppressed.

More specifically, let us assume a case where, for example, when inserting the electrode assembly 14 into the housing can 16 from above, the edge of the housing can 16 comes into contact with a lower end portion 42A of the negative electrode core-exposed portion 42 that is exposed from a gap 55 between the first end 51 and the second end 52. In doing so, local curling of the electrode plate may occur in the lower end portion 42A of the negative electrode core-exposed portion 42. As described above, the tapes 50 are applied so that the first end 51 and the second end 52 overlap with each other in the axial direction of the electrode assembly 14. Therefore, even in a case where the electrode assembly 14 is further inserted deeper into the housing can 16 and the curling progresses along an insertion direction of the electrode assembly 14 or, in other words, the axial direction of the electrode assembly 14, the progress of the curling can be blocked by the tapes 50. In other words, when the first end 51 and the second end 52 of the tapes 50 are applied so as not to overlap with each other in the axial direction of the electrode assembly 14, since a region where the negative electrode 12 is exposed along the axial direction of the electrode assembly 14 is created on the outer circumferential surface of the electrode assembly 14, there may be cases where the progress of the curling cannot be blocked. As a result, the curled negative electrode 12 may come into contact with the positive electrode 11 or the positive electrode lead 20 and a short circuit may occur.

In the present embodiment, the first end 51 and the second end 52 of the tapes 50 are inclined relative to the axial direction of the electrode assembly 14 and are formed approximately parallel to each other. Accordingly, the negative electrode 12 (negative electrode core-exposed portion 42) can be prevented from being exposed along the entire axial direction on the outer circumferential surface of the electrode assembly 14 while ensuring that the tapes 50 do not overlap with each other in the thickness direction. As a result, progress of curling of the electrode plate which occurs when inserting the electrode assembly 14 into the housing can 16 can be suppressed.

While angles of inclination of the first end 51 and the second end 52 relative to the axial direction of the electrode assembly 14 are not particularly limited, for example, the angles of inclination are greater than or equal to 20° and less than or equal to 70°. In addition, the angles of inclination of the first end 51 and the second end 52 relative to the axial direction of the electrode assembly 14 may differ from each other. For example, the angle of inclination of the first end 51 may be greater than the angle of inclination of the second end 52.

A distance between the first end 51 and the second end 52 or, in other words, a length of the gap 55 in the circumferential direction is preferably greater than or equal to 1.0 mm and more preferably greater than or equal to 2.0 mm. In this case, even when variability in production is taken into consideration, the tapes 50 can be readily applied so as not to overlap in the thickness direction of the tapes 50 over the entire outer circumferential surface of the electrode assembly 14. In addition, the distance between the first end 51 and the second end 52 may be uniform along the axial direction of the electrode assembly 14 or may vary in the axial direction of the electrode assembly 14. For example, the distance between the first end 51 and the second end 52 may be formed so as to decrease in a lower region of the tapes 50 and increase in an upper region of the tapes 50.

The tapes 50 include the narrow width regions 53 and 54 where the width of the tapes 50 gradually decreases as the tapes 50 approach the first end 51 and the second end 52. In the present embodiment, in the narrow width regions 53 and 54, the width of the tapes 50 linearly decreases as the tapes 50 approach the first end 51 and the second end 52. Note that the width of the tapes 50 may non-linearly decrease as the tapes 50 approach the first end 51 and the second end 52. In addition, the narrow width regions 53 and 54 may be formed only in one end portion among both end portions of the tapes 50 in the length direction.

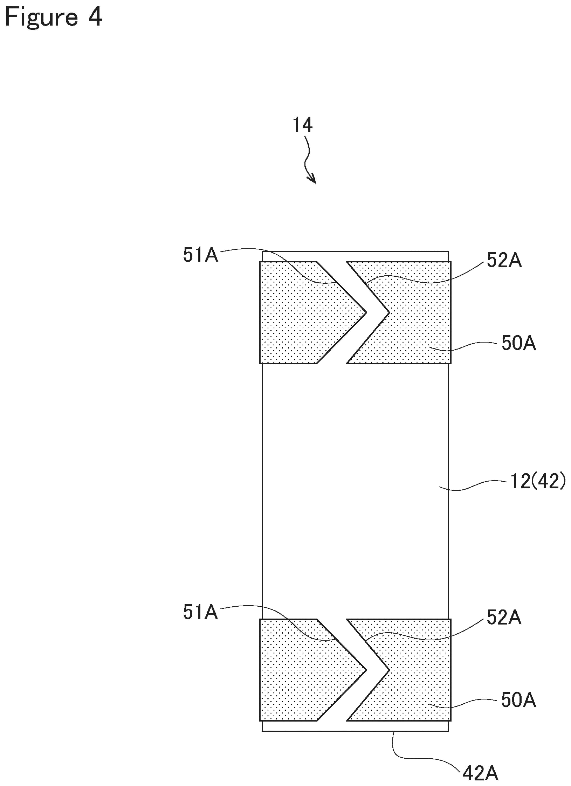

Modifications of the shape of the tapes 50 will be demonstrated with reference to FIGS. 4 to 6. FIGS 4 to 6 are plan views of the electrode assembly 14 as viewed from the outer side in the radial direction. As shown in FIG. 4, tapes 50A have a shape in which a first end 51A and a second end 52A are bent, respectively. By bending the first end 51A and the second end 52A, the tapes 50A can be applied so that the first end 51A and the second end 52A overlap with each other in the axial direction of the electrode assembly 14 while preventing the tapes 50A from overlapping with each other in the thickness direction. In the present embodiment, the first end 51A is bent in a V-shape so that a center in the width direction protrudes while the second end 52A is bent in a V-shape so that a center in the width direction depresses.

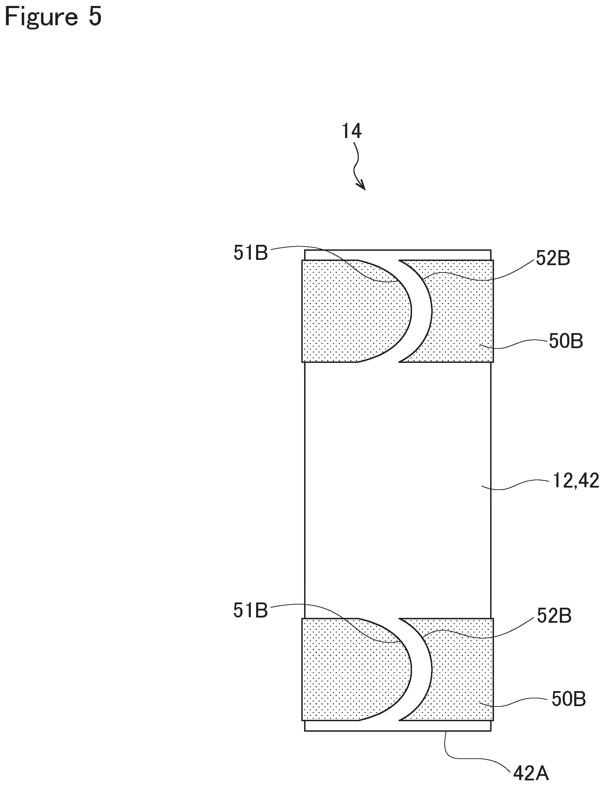

In addition, as shown in FIG. 5, in tapes 50B, a first end 51B and a second end 52B may have an arc shape, respectively. Even in this case, in a similar manner to the tapes 50 and 50A, the tapes 50B can be applied so that the first end 51B and the second end 52B overlap with each other in the axial direction of the electrode assembly 14 while preventing the tapes 50B from overlapping with each other in the thickness direction. In the present embodiment, the first end 51A is bent so that a center in the width direction protrudes while the second end 52A is bent so that a center in the width direction is depressed. In addition, when the first end 51B and the second end 52B have an arc shape, stress concentration at the end portions of the tapes 50B is alleviated, making it less likely for the tapes 50B to peel away from the outer circumferential surface of the electrode assembly 14.

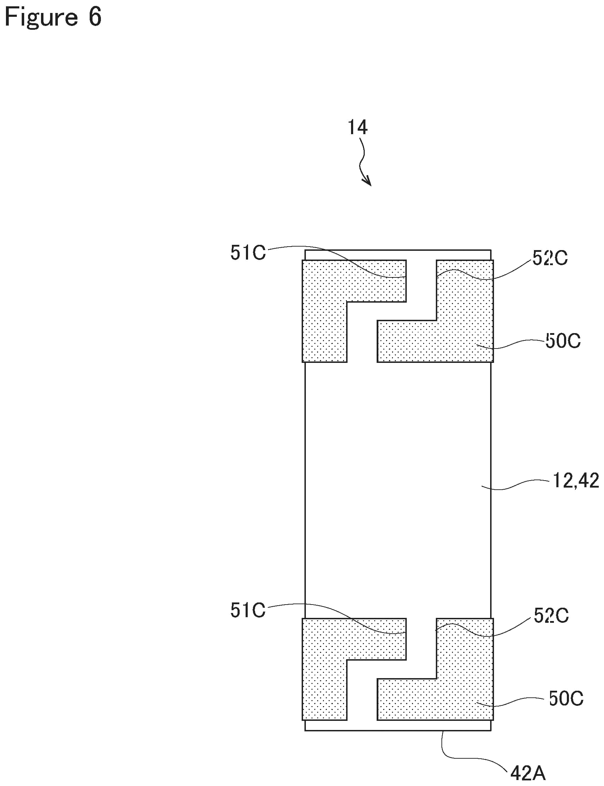

In addition, as shown in FIG. 6, in tapes 50C, a first end 51C and a second end 52C may have a stepped shape, respectively. Even in this case, in a similar manner to the tapes 50, 50A, and 50B, the tapes 50C can be applied so that the first end 51C and the second end 52C overlap with each other in the axial direction of the electrode assembly 14 while preventing the tapes 50C from overlapping with each other in the thickness direction. Note that the number of steps is not limited to one step and may be greater than or equal to two steps.

Note that the embodiment described above can be appropriately modified without impairing the object of the present disclosure. For example, while two tapes 50 are applied to both end portions of the electrode assembly 14 in the axial direction in the embodiment described above, the embodiment is not limited to using two tapes 50. For example, one tape 50 may be applied to the lower end portion of the electrode assembly 14 in the axial direction. Alternatively, one tape 50 may be applied to the center of the electrode assembly 14 in the axial direction. Note that from the perspective of further suppressing a short circuit due to curling of the electrode plates, the tape 50 is preferably applied to at least the lower end portion of the electrode assembly 14 in the axial direction and more preferably applied to both end portions of the electrode assembly 14 in the axial direction.

In addition, while the gaps 55 of the two tapes 50 applied to both end portions of the electrode assembly 14 in the axial direction, respectively, are arranged approximately in a straight line along the axial direction of the electrode assembly 14, the arrangement of the gaps 55 is not limited thereto.

The present disclosure is further illustrated by the following embodiments.

Configuration 1: A secondary battery, comprising: a wound electrode assembly in which a positive electrode and a negative electrode are wound around a separator; and a cylindrical housing can that houses the electrode assembly, wherein strip tapes for fixing a winding end of the electrode assembly are applied to an outer circumferential surface of the electrode assembly, and the tapes are applied so that the tapes do not overlap with each other in a thickness direction of the tapes but both end portions in the vicinity of the tapes in a length direction overlap with each other in an axial direction of the electrode assembly.

Configuration 2: The secondary battery according to Configuration 1, wherein in a side view of the electrode assembly from an outer side in a radial direction, end portions of the tape are inclined relative to the axial direction of the electrode assembly.

Configuration 3: The secondary battery according to Configuration 1 or 2, wherein the tapes include narrow width regions in which a width of the tapes gradually decreases as the tapes approach the end portions of the tapes in the length direction.

Configuration 4: The secondary battery according to any one of Configurations 1 to 3, wherein in a side view of the electrode assembly from an outer side in the radial direction, end portions of the tapes have a bent shape.

Configuration 5: The secondary battery according to any one of Configurations 1 to 4, wherein in a side view of the electrode assembly from an outer side in a radial direction, end portions of the tapes have an arc shape.

Configuration 6: The secondary battery according to any one of Configurations 1 to 5, wherein the tapes are applied to both end portions of the electrode assembly in the axial direction.

Configuration 7: The secondary battery according to any one of Configurations 1 to 6, wherein an area over which the tapes are applied is greater than or equal to 20% of an area of the outer circumferential surface of the electrode assembly.

### REFERENCE SIGNS LIST

10 Secondary battery, 11 Positive electrode, 12 Negative electrode, 13 Separator, 14 Electrode assembly, 16 Housing can, 17 Sealing assembly, 18, 19 Insulating plate, 20 Positive electrode lead, 21 Grooved portion, 23 Internal terminal plate, 24 Lower vent member, 25 Insulating member, 26 Upper vent member, 27 Cap, 28 Gasket, 30 Positive electrode core, 31 Positive electrode mixture layer, 40 Negative electrode core, 41 Negative electrode mixture layer, 42, Negative electrode core-exposed portion, 42A Lower end portion, 50, 50A, 50B, 50C Tape, 51, 51A, 51B, 51C First end, 52, 52A, 52B, 52C Second end, 53, 54 Narrow width region, 57 Gap

## Claims

1. A secondary battery, comprising:
a wound electrode assembly in which a positive electrode and a negative electrode are wound around a separator; and
a cylindrical housing can that houses the electrode assembly, wherein
strip tapes for fixing a winding end of the electrode assembly are applied to an outer circumferential surface of the electrode assembly, and
the tapes are applied so that the tapes do not overlap with each other in a thickness direction of the tapes but both end portions of the tapes in a length direction overlap with each other in an axial direction of the electrode assembly.

2. The secondary battery according to Claim 1, wherein in a side view of the electrode assembly from an outer side in a radial direction, end portions of the tape in a length direction are inclined relative to the axial direction of the electrode assembly.

3. The secondary battery according to Claim 1, wherein the tapes include narrow width regions in which a width of the tapes gradually decreases as the tapes approach the end portions of the tapes in the length direction.

4. The secondary battery according to Claim 1, wherein in a side view of the electrode assembly from the outer side in the radial direction, end portions of the tapes in the length direction have a bent shape.

5. The secondary battery according to Claim 1, wherein in a side view of the electrode assembly from the outer side in the radial direction, end portions of the tapes in the length direction have an arc shape.

6. The secondary battery according to Claim 1, wherein the tapes are applied to both end portions of the electrode assembly in the axial direction.

7. The secondary battery according to Claim 1, wherein an area over which the tapes are applied is greater than or equal to 20% of an area of the outer circumferential surface of the electrode assembly.
